(19) Europäisches Patentamt
European Patent Office
Office européen des brevets

(11) **EP 4 672 828 A1**

(12) **EUROPEAN PATENT APPLICATION**
published in accordance with Art. 153(4) EPC

(43) Date of publication:
**31.12.2025 Bulletin 2026/01**

(21) Application number: **23923261.4**

(22) Date of filing: **21.02.2023**

(51) International Patent Classification (IPC):
*H04W 52/36* (2009.01)

(52) Cooperative Patent Classification (CPC):
**H04W 52/28; H04W 52/36**

(86) International application number:
**PCT/CN2023/077304**

(87) International publication number:
**WO 2024/174075 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **GUO, Shengxiang
Beijing 100085 (CN)**

(74) Representative: **Dehns Germany Partnerschaft
mbB
Theresienstraße 6-8
80333 München (DE)**

(54) **COMMUNICATION METHOD AND APPARATUS, AND READABLE STORAGE MEDIUM**

(57) The present disclosure provides a communication method and apparatus, and a readable storage medium. The method comprises: using first information to determine a first maximum power reduction (MPR), wherein the first information is used for indicating a method for determining the MPR under a first condition.

In the method of the present disclosure, a UE can use an indication in first information to determine a more-reasonable MPR under a first condition, so as to reduce power reduction under said first condition, thereby helping to improve uplink coverage.

```
┌──────────────────────┐                                    ┌──────────────────────┐
│  User equipment 101   │                                    │  Network device 102   │
└──────────────────────┘                                    └──────────────────────┘
            │                                                            │
            │    S201, Transmit first information, where the             │
            │◄── first information is configured to indicate a ──────────│
            │       determination mode for MPR under a first            │
            │                     condition                             │
            │                                                            │
  S202, Determine, based on first                                        │
       information, first MPR                                            │
            │                                                            │
```

FIG. 2

**Description**

**TECHNICAL FIELD**

The present disclosure relates to the field of communication technologies, in particular to a communication method and apparatus, and a readable storage medium.

**BACKGROUND**

In order to meet the requirements of in-band and out-of-band radiation, a terminal is allowed to perform certain power reduction during transmission, such as maximum power reduction (MPR). The power reduction will apply a maximum configured power ($P_{CMAX}$) allowed by the terminal, and greater power reduction will have a certain impact on the uplink coverage of the terminal.

**SUMMARY**

Embodiments of the present disclosure provides a communication method and apparatus, and a readable storage medium.

According to a first aspect of the embodiments of the present disclosure, there is provided a communication method, performed by a user equipment, including: determining, based on first information, first maximum power reduction (MPR), where the first information is configured to indicate a determination mode for MPR under a first condition.

In the method of the present disclosure, according to the indication of the first information, the user equipment can determine a more reasonable MPR under the first condition, with a view to reducing the power reduction under the first condition, thus being beneficial to enhancing the uplink coverage.

In some embodiments, the method further includes: receiving the first information transmitted by a network device.

In some embodiments, determining, based on the first information, the first MPR includes: transmitting, based on the first information and second information, request information to a network device, where the request information is configured to request the first MPR corresponding to the first condition; and in response to receiving feedback information transmitted by the network device, determining the first MPR, where the feedback information is configured to allow a request of the user equipment.

In some embodiments, the second information includes location information of the user equipment.

In some embodiments, the first information includes an information field for indicating the determination mode.

In some embodiments, determining, based on the first information, the first MPR includes: determining, based on a bit value of the information field, a corresponding determination mode; and determining, based on the corresponding determination mode, the first MPR.

In some embodiments, the method further includes: determining, based on the first MPR, a maximum configured power ($P_{CMAX}$) allowed by a terminal.

In some embodiments, in a multi-carrier scenario, each of a plurality of carriers is correspondingly configured with the first information, or each of a plurality of frequency bands is correspondingly configured with the first information.

According to a second aspect of the embodiments of the present disclosure, there is provided a communication method, performed by a network device, including: transmitting first information to a user equipment, where the first information is configured to indicate a determination mode for maximum power reduction (MPR) under a first condition.

In the method of the present disclosure, the network device can transmit the first information to the user equipment to indicate the determination mode for MPR under the first condition, such that the user equipment can determine a more reasonable MPR under the first condition, with a view to reducing the power reduction under the first condition, thus being beneficial to enhancing the uplink coverage.

In some embodiments, the method further includes: receiving request information transmitted by the user equipment, where the request information is configured to request a first MPR corresponding to the first condition; and transmitting feedback information corresponding to the request information to the user equipment, where the feedback information is configured to allow a request of the user equipment.

In some embodiments, the first information includes an information field for indicating the determination mode.

In some embodiments, in a multi-carrier scenario, each of a plurality of carriers is correspondingly configured with the first information, or each of a plurality of frequency bands is correspondingly configured with the first information.

According to a third aspect of the embodiments of the present disclosure, there is provided a communication apparatus, which may be configured to perform the steps performed by the user equipment in the first aspect or in any of the possible designs of the first aspect. The user equipment can realize the functions in the above-mentioned methods through a hardware structure, a software module, or a combination of a hardware structure and a software module.

When implementing the apparatus shown in the third aspect through software modules, the apparatus may include a processing module, where the processing module can be used by the communication device to perform processing operations, such as generating information/messages that need to be transmitted, or processing received signals to obtain information/messages.

When performing the steps of the first aspect, the processing module is configured to determine, based on first information, first maximum power reduction (MPR), where the first information is configured to indicate a determination mode for MPR under a first condition.

According to a fourth aspect of the embodiments of the present disclosure, there is provided a communication apparatus, which may be configured to perform the steps performed by the network device in the second aspect or in any of the possible designs of the second aspect. The network device can realize the functions in the above-mentioned methods through a hardware structure, a software module, or a combination of a hardware structure and a software module.

In implementing the apparatus shown in the fourth aspect by means of a software module, the apparatus may include a transmitting and receiving module, where the transmitting and receiving module may be configured to support the communication device for communication.

When performing the steps of the second aspect, the transmitting and receiving module is configured to transmit first information to a user equipment, where the first information is configured to indicate a determination mode for maximum power reduction (MPR) under a first condition.

According to a fifth aspect of the embodiments of the present disclosure, there is provided a user equipment including one or more processors and a memory, where the memory is configured to store computer programs, and the computer programs, when executed by the one or more processors, cause the one or more processors to perform the steps in the first aspect or in any of the possible designs of the first aspect.

According to a sixth aspect of the embodiments of the present disclosure, there is provided a network device including one or more processors and a memory, where the memory is configured to store computer programs, and the computer programs, when executed by the one or more processors, cause the one or more processors to perform the steps in the second aspect or in any of the possible designs of the second aspect.

According to a seventh aspect of the present disclosure, there is provided a computer-readable storage medium, storing instructions (or computer programs, or programs) thereon, where the instructions, when executed by one or more processors, cause the one or more processors to perform the steps in the first aspect or in any of the possible designs of the first aspect.

According to an eighth aspect of the present disclosure, there is provided a computer-readable storage medium, storing instructions (or computer programs, or programs) thereon, where the instructions, when executed by one or more processors, cause the one or more processors to perform the steps in the second aspect or in any of the possible designs of the second aspect.

It is to be understood that the above general descriptions and the below detailed descriptions are merely exemplary and explanatory, and are not intended to limit the present disclosure.


**BRIEF DESCRIPTION OF THE DRAWINGS**

The drawings described here are used to provide a further understanding of the present specification and constitute a part of the present disclosure. The schematic implementations of the present disclosure and the description thereof are used to explain the present disclosure, and do not constitute an improper limitation on the present disclosure.

The accompanying drawings, which are incorporated in and constitute a part of this specification, illustrate embodiments consistent with the present disclosure and, together with the description, serve to explain the principles of the disclosure.

FIG. 1 is a schematic diagram illustrating a wireless communication system architecture according to an embodiment of the present disclosure.

FIG. 2 is an interaction flowchart illustrating a communication method according to an embodiment of the present disclosure.

FIG. 3 is an interaction flowchart illustrating a communication method according to another embodiment of the present disclosure.

FIG. 4 is a flowchart illustrating a communication method according to an embodiment of the present disclosure.

FIG. 5 is a flowchart illustrating a communication method according to another embodiment of the present disclosure.

FIG. 6 is a flowchart illustrating a communication method according to yet another embodiment of the present disclosure.

FIG. 7 is a flowchart illustrating a communication method according to still another embodiment of the present disclosure.

FIG. 8 is a block diagram illustrating a communication apparatus according to an embodiment of the present disclosure.

FIG. 9 is a block diagram illustrating a user equipment according to an embodiment of the present disclosure.

FIG. 10 is a block diagram illustrating a communication apparatus according to an embodiment of the present disclosure.

FIG. 11 is a block diagram illustrating a network device according to an embodiment of the present disclosure.

## DETAILED DESCRIPTION OF THE EMBODIMENTS

The embodiments of the present disclosure will be further described in detail below in conjunction with accompanying drawings and specific examples.

Examples will be described in detail herein, with the illustrations thereof represented in the drawings. Where the following description relates to the drawings, unless otherwise indicated, the same numerals in different drawings represent the same or similar elements. The embodiments described in the following exemplary embodiments do not represent all embodiments consistent with the present disclosure. Rather, they are merely examples of apparatuses and methods consistent with some aspects of the present disclosure as detailed in the appended claims.

The terms used in the present disclosure are for the purpose of describing a particular example only, and are not intended to limit the present disclosure. The singular forms such as "a," "said," and "the" used in the present disclosure and the appended claims are also intended to include multiple, unless the context clearly indicates otherwise. It will also be understood that as used herein, the term "and/or" is and includes any or all combinations of one or more of the associated listed items.

It is to be understood that although different information may be described using the terms such as "first," "second," "third," etc. in the present disclosure, the information should not be limited to these terms. These terms are used only to distinguish the same type of information from each other. For example, the first information may also be referred to as the second information without departing from the scope of the present disclosure, and similarly, the second information may also be referred to as the first information. Depending on the context, as used herein, the wording "if" may be interpreted as "while ..." or "when ..." or "in response to a determination".

Hereinafter, the embodiments of the present disclosure will be described in detail, examples of which are illustrated in the accompanying drawings, where the same or similar reference numerals indicate the same or similar elements throughout. The embodiments described below by reference to the accompanying drawings are exemplary and are intended to explain the present disclosure and are not to be construed as limiting the present disclosure.

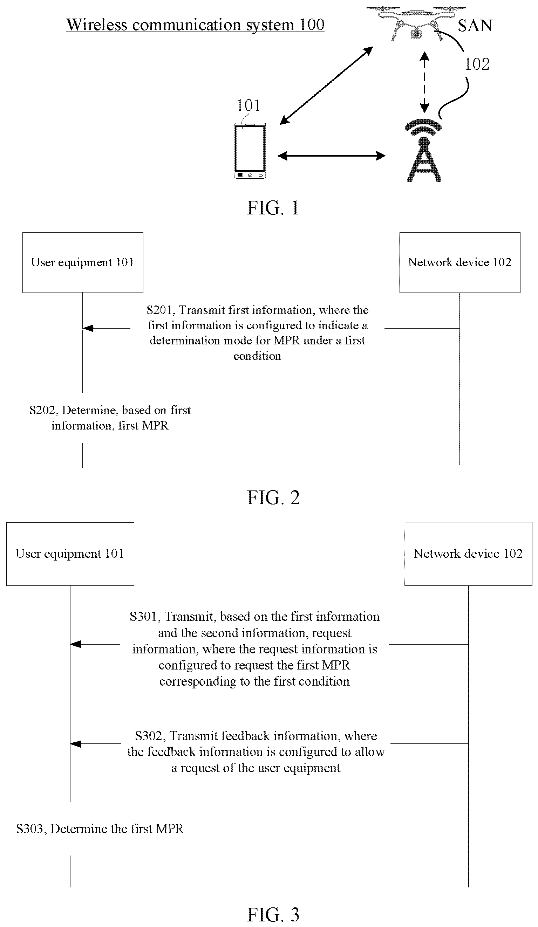

As shown in FIG. 1, an embodiment of the present disclosure provides a communication method that can be applied to a wireless communication system 100, which may include, but is not limited to, a user equipment 101 and a network device 102. The user equipment 101 is configured to support carrier aggregation, and the user equipment 101 may be connected to a plurality of carrier units of the network device 102, including a primary component carrier unit and one or more secondary component carrier units.

The network device 102 may include an access network device, a ground station, an earth station or a gateway in a terrestrial network (TN), or a satellite access network (SAN) in a non-terrestrial network (NTN).

The access network device is a device that has the function of providing network access, such as a radio access network (RAN) base station and the like. The network device may include a base station (BS), or include a BS and a wireless resource management device for controlling the BS, and the like. The network device 102 may also include relay stations (relay devices), access points, and base stations in the future 5G network, and base stations or NR base stations in the future evolved PLMN network, and the like. The network device 102 may be a wearable device or an on-board device. The network device 102 can also be a communication chip with a communication module.

It will be understood that the wireless communication system 100 may be suitable for both low frequency and high frequency scenes. The application scenes of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) systems, a future 5th-generation (5G) system, a new radio (NR) communication system, a future evolved public land mobile network (PLMN) system, and other systems.

The user equipment 101 may be a terminal, an access terminal, a terminal unit, a terminal station, a mobile station (MS), a remote station, a remote terminal, a mobile terminal, a wireless communication device, a terminal agent, a terminal equipment, etc. The user equipment 101 may have a wireless receiving and transmitting function, which is capable of communicating (e.g., wireless communication) with one or more network devices of one or more communication systems and accepting network services provided by the network devices, which herein include, but are not limited to, a network device 102 illustrated.

The user equipment (UE) 101 may be a cellular telephone, a cordless telephone, a session initiation protocol (SIP) telephone, a wireless local loop (WLL) station, a personal digital assistant (PDA) device, a handheld device with wireless communication capabilities, a computing device, other processing devices connected to wireless modems, an on-board device, a wearable device, a terminal equipment in a future 5G network or in a future evolved PLMN network, and so on.

As shown in a Table 1, the MPR generally does not exceed the values defined in the Table 1. The MPR is related to modulation waveforms, orders and resource locations. The MPR corresponding to different modulation waveforms, orders and resource locations can be prestored in the user equipment 101.

Table 1

| Modulation | | MPR (dB) | | |
|---|---|---|---|---|
| | | Edge Resource Block (RB) allocations | Outer RB allocations | Inner RB allocations |
| Discret e Fourier Transform spread Orthogonal Frequency Division Multiplexin g (DFT-s-OFDM) | Pi/2 Binary Phase Shift Keying (BPSK) | $\leq 3.5^1$ | $\leq 1.2^1$ | $\leq 0.2^1$ |
| | | $\leq 0.5^2$ | $\leq 0.5^2$ | $0^2$ |
| | Pi/2 BPSK w Pi/2 BPSK Demodulation Reference Signal (DMRS) | $\leq 0.5^2$ | $\leq 0^2$ | $0^2$ |
| | Quadrature Phase Shift Keying (QPSK) | $\leq 1$ | | 0 |
| | 16 Quadrature Amplitude Modulation (QAM) | $\leq 2$ | | $\leq 1$ |
| | 64 QAM | $\leq 2.5$ | | |
| | 256 QAM | $\leq 4.5$ | | |
| Cyclic Prefix Orthogonal Frequency Division Multiplexin g (CP-OFDM) | QPSK | $\leq 3$ | | $\leq 1.5$ |
| | 16 QAM | $\leq 3$ | | $\leq 2$ |
| | 64 QAM | $\leq 3.5$ | | |
| | 256 QAM | $\leq 6.5$ | | |
| NOTE 1: Applicable for time division duplexing (TDD) mode, and for the uplink transmission for bands n40, n41, n77, n78 and n79. The reference power is 26 dBm when the MPR is 0dB. | | | | |
| NOTE 2: Applicable to frequency division duplexing (FDD) mode, or the TDD mode in bands other than n40, n41, n77, n78 and n79. | | | | |

The edge resource block (Edge RB) refers to a resource block (RB) located on the boundaries of both sides of the frequency band, and the outer resource block (Outer RB) is located between the inner resource block (Inner RB) and the Edge RB.

The out-of-band radiation requirement is generally based on the regulatory requirement, and the out-of-band radiation requirement is to prevent the user equipment 101 from causing excessive interference to other equipment. The in-band radiation requirement mainly depends on the requirement of error vector magnitude (EVM) corresponding to the modulation mode. Under some specific environmental conditions, the application of MPR may be different.

An embodiment of the present disclosure provides a communication device. FIG. 2 is an interaction flowchart illustrating a communication method according to an embodiment of the present disclosure. As shown in FIG. 2, the method includes the following steps S201 to S202.

At step S201, the network device 102 transmits first information to the user equipment 101, where the first information is configured to indicate a determination mode for maximum power reduction (MPR) under a first condition.

In some embodiments, in the communication system shown in FIG. 1, the network device 102 can be either a ground base station or a SAN.

In some embodiments, the first condition is, for example, a condition associated with a geographical feature, location or regulatory requirements. For example, the first condition refers to the environmental condition that meets the requirements of few network access devices and do not need to consider interference with other devices, that is, the environmental condition that does not need to consider the out-of-band radiation requirement. The environment that meets the first condition can include: the high seas, deserts, mountains, remote mountainous areas and other inaccessible environments.

In some embodiments, the network device 102 can determine whether it meets the first condition according to the geographical location, geographical features or regulatory requirements of the current environment or deployment place.

In some embodiments, the MPR under the first condition may be less than the value defined by the relevant protocols in the Table 1, for example, the MPR may be 0. It is to be understood that under the first condition, when accessing the network device 102, it may not be necessary to meet the out-of-band radiation requirement, so the power reduction can be reduced.

In some embodiments, the network device 102 may transmit the indication information through radio resource control (RRC). Alternatively, the indication information is transmitted through downlink control information (DCI).

In some embodiments, the first information may indicate multiple determination modes for MPR, for example, it may include a determination mode for MPR under the first condition and a determination mode for MPR under the conventional condition.

It is to be understood that the determination mode is how to calculate or determine the MPR, and it can also be understood as the applicable situation of the MPR. For example, the determination mode includes a mode for determining the MPR based on relevant protocols listed in the Table 1.

At step S202, the user equipment 101 determines, based on first information, first maximum power reduction (MPR), where the first information is configured to indicate a determination mode for MPR under a first condition.

In some embodiments, the user equipment 101 can select a more suitable first MPR according to the usage of MPR notified by the network device 102.

For example, under the first condition, the user equipment 101 may choose smaller MPR than that in the related protocol, for example, the first MPR may be 0.

In the embodiments of the present disclosure, the network device 102 can transmit the first information to the user equipment 101 to indicate the determination mode for MPR under the first condition, such that the user equipment 101 can determine a more reasonable MPR under the first condition, with a view to reducing the power reduction under the first condition, thus being beneficial to enhancing the uplink coverage.

An embodiment of the present disclosure provides a communication device. FIG. 3 is an interaction flowchart illustrating a communication method according to an embodiment of the present disclosure. As shown in FIG. 3, the method includes the following steps S301 to S303.

At step S301, the user equipment 101 transmits, based on the first information and second information, request information to the network device 102, where the request information is configured to request the first MPR corresponding to the first condition; and

In some embodiments, the first information can be defined through a protocol or configured to the user equipment 101 by the network device 102.

In some embodiments, the second information includes location information of the user equipment 101. Alternatively, the second information may be information associated with the location of the user equipment 101. The location information of the user equipment 101 can characterize the geographical location or environment where the user equipment 101 is located, including but not limited to latitude and longitude, absolute coordinates in a known reference system, relative coordinates relative to a known reference object or angular distance relative to a known reference object.

In an example, the user equipment 101 can locate through its own sensor to obtain location information.

In another example, the user equipment 101 may know the location information informed by the network device 102 based on communication with different network devices 102.

In some embodiments, the user equipment 101 determines whether the geographical location or environment meets the first condition according to the second information, such as location information. When the first condition is met, the user equipment 101 determines the MPR (that is, the first MPR) smaller than that in the related protocol in the first information.

In some embodiments, after the user equipment 101 determines the first MPR by itself, it needs to transmit request information to the network device 102 to apply for applying the first MPR.

At step S302, the network device 102 receives the request information, and transmits feedback information corresponding to the request information to the user equipment 101, where the feedback information is configured to allow a request of the user equipment 101.

In some embodiments, after receiving the request information of the user equipment 101, the network device 102 may allow the request of the user equipment 101.

Alternatively, the network device 102 can verify the location of the user equipment 101 and verify whether the first MPR requested by the user equipment 101 conforms to the corresponding determination mode. After the verification is passed, the allowed feedback information is transmitted.

At step S303, the user equipment 101 determines the first MPR when receiving the feedback information.

In some embodiments, the user equipment 101 can apply the first MPR after receiving the feedback information.

In some embodiments, if the user equipment 101 does not receive the feedback information within a preset duration, or receives the rejection information from the network device 102, the user equipment 101 cannot apply the first MPR, and needs to adopt the MPR defined in the relevant protocol.

In the embodiments of the present disclosure, the user equipment 101 can determine the applicable MPR according to its own environment, and apply to the network device 102. After obtaining the permission of the network device 102, the user equipment 101 applies the requested MPR, so as to reduce the power reduction and enhance the uplink coverage.

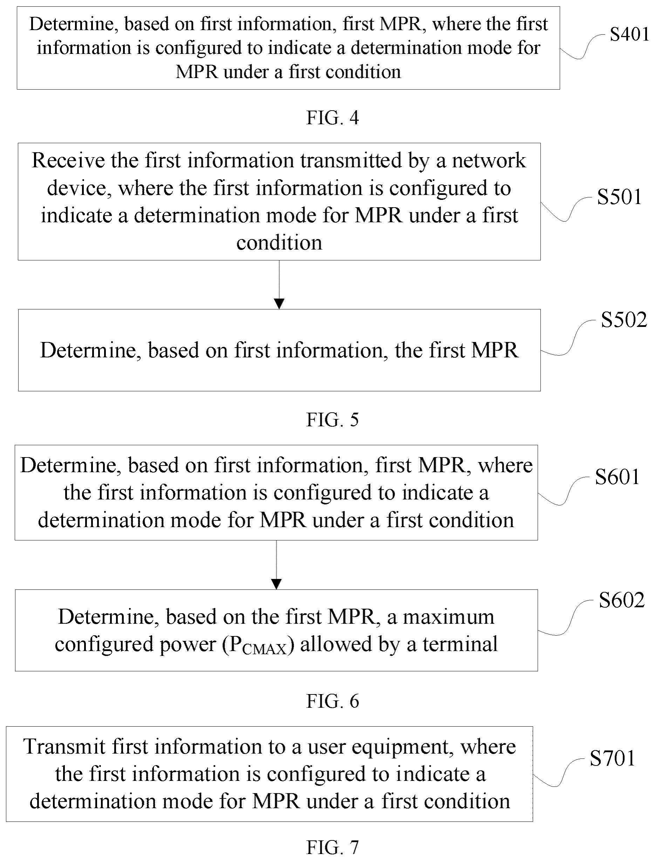

An embodiment of the present disclosure provides a communication method, and the method is performed by a user equipment 101. FIG. 4 is a flowchart illustrating a communication method according to an embodiment of the present disclosure. As shown in FIG. 4, the method includes the following step S401.

At step S401, the user equipment 101 determines, based on first information, first maximum power reduction (MPR), where the first information is configured to indicate a determination mode for MPR under a first condition.

In some embodiments, the first condition is, for example, a condition associated with a geographical feature, location or regulatory requirements. For example, the first condition refers to the environmental condition that meets the requirements of few network access devices and do not need to consider interference with other devices, that is, the environmental condition that does not need to consider the out-of-band radiation requirement. The environment that meets the first condition can include: the high seas, deserts, mountains, remote mountainous areas and other inaccessible environments.

In some embodiments, the MPR under the first condition may be less than the value defined by the relevant protocols in the Table 1, for example, the MPR may be 0. It is to be understood that under the first condition, when accessing the network device 102, it may not be necessary to meet the out-of-band radiation requirement, so the power reduction can be reduced.

In some embodiments, in a multi-carrier scenario, each of a plurality of carriers is correspondingly configured with the first information, or each of a plurality of frequency bands is correspondingly configured with the first information.

The multi-carrier scenario can be a multi-carrier scenario based on Carrier Aggregation (CA), a multi-carrier scenario based on Dual Connectivity (DC), or a multi-carrier scenario based on Multi-RAT (Radio Access Technology) Dual Connectivity (MRDC) of multiple access systems. The MRDC can be an evolved universal terrestrial radio access network (E-UTRAN) new radio dual connectivity (EN-DC) or a new radio (NR) eNB Dual Connectivity (NE-DC).

In the embodiments of the present disclosure, according to the indication of the first information, the user equipment 101 can determine a more reasonable MPR under the first condition, with a view to reducing the power reduction under the first condition, thus being beneficial to enhancing the uplink coverage.

An embodiment of the present disclosure provides a communication method, and the method is performed by a user equipment 101. FIG. 5 is a flowchart illustrating a communication method according to an embodiment of the present disclosure. As shown in FIG. 5, the method includes the following steps S501 to S502.

At step S501, the user equipment 101 receives first information transmitted by the network device 102, where the first information is configured to indicate a determination mode for maximum power reduction (MPR) under a first condition.

In some embodiments, the network device 102 can transmit the first information to the user equipment 101 when the first condition is met. Alternatively, the network device 102 may transmit the first information according to the request of the user equipment 101.

In some embodiments, the user equipment 101 may receive the indication information transmitted by the network device 102 through RRC signaling or DCI.

In some embodiments, when the user equipment 101 fails to receive the first information transmitted by the network device 102, the user equipment 101 determines the MPR according to the mode in the relevant protocol.

In some embodiments, in a multi-carrier scenario, each of a plurality of carriers is correspondingly configured with the first information, or each of a plurality of frequency bands is correspondingly configured with the first information.

In an example, when configuring corresponding first information for each carrier, the network device 102 transmits the first information in per component carrier (CC).

In another example, when configuring corresponding first information for each frequency band, the network device 102 transmits the first information in per band.

At step S502, the user equipment 101 determines, based on first information, first maximum power reduction (MPR), where the first information is configured to indicate a determination mode for MPR under a first condition.

The implementation of step S502 refers to step S401, which will not be described here.

In the embodiments of the present disclosure, the user equipment 101 receives first information transmitted by the network device 102 to learn a determination mode for maximum power reduction (MPR) under a first condition.

An embodiment of the present disclosure provides a communication method, and the method is performed by a user equipment 101. The method includes the following steps S401-1 and S401-2.

At step S401-1, the user equipment 101 transmits, based on the first information and second information, request information to the network device 102, where the request information is configured to request the first MPR corresponding to the first condition.

In some embodiments, the first information can be defined through a protocol or configured to the user equipment 101 by the network device 102.

In some embodiments, the second information includes location information of the user equipment 101. Alternatively, the second information may be information associated with the location of the user equipment 101. The location information of the user equipment 101 can characterize the geographical location or environment where the user equipment 101 is located, including but not limited to latitude and longitude, absolute coordinates in a known reference system, relative coordinates relative to a known reference object or angular distance relative to a known reference object.

In some embodiments, the user equipment 101 determines whether the geographical location or environment meets the first condition according to the second information, such as location information. When the first condition is met, the user equipment 101 determines the MPR (that is, the first MPR) smaller than that in the related protocol in the first information.

In some embodiments, after the user equipment 101 determines the first MPR by itself, it needs to transmit request information to the network device 102 to apply for applying the first MPR.

At step S401-2, when receiving feedback information transmitted by the network device, the user equipment 101 determines the first MPR, where the feedback information is configured to allow a request of the user equipment 101.

In some embodiments, only when receiving the feedback information, the user equipment 101 can determine to adopt the requested first MPR. When the feedback information is not received, or a rejection information is received, the user equipment 101 needs to adopt the MPR defined in the relevant protocol.

In the embodiments of the present disclosure, the user equipment 101 can determine the applicable MPR according to its own environment, and apply to the network device 102. After obtaining the permission of the network device 102, the user equipment 101 applies the requested MPR, so as to reduce the power reduction and enhance the uplink coverage.

An embodiment of the present disclosure provides a communication method, and the method is performed by a user equipment 101. The method includes the following step S401.

At step S401, the user equipment 101 determines, based on first information, first maximum power reduction (MPR), where the first information is configured to indicate a determination mode for MPR under a first condition.

The first information includes an information field for indicating the determination mode.

In some embodiments, the first information can be issued (transmitted) by the network device 102.

In some embodiments, the user equipment 101 can also determine the applicable first MPR based on the location information, and apply the first MPR when the request of the user equipment 101 is allowed by the network device 102.

In some embodiments, the information field can include one or more bits. When the bit values in the information field are different, they correspond to indicate the determination modes.

For example, in an example, the information field includes two bits. As shown in the Table 2, when the two bits are 00, the corresponding determination mode is a first mode; when the two bits are 01, the corresponding determination mode is a second mode; when the two bits are 10, the corresponding determination mode is a third mode.

In the first mode, the MPR and additional-MPR (A-MPR) are determined according to the relevant protocols listed in the Table 1.

In the second mode, there is no out-of-band radiation requirement, and MPR without out-of-band radiation requirement can be selected. In the second mode, the A-MPR is 0.

In the third mode, the MPR is 0, and the A-MPR is also 0.

Table 2

| Value of the two bits | Determination mode |
| --- | --- |
| 00 | First mode |
| 01 | Second mode |
| 10 | Third mode |
| 11 | Reserved bit |

It is to be noted that under the first condition, the MPR may be determined in the second or third mode.

In some embodiments, the step S401 may include the following step S401'.

At step S401', the user equipment 101 determines the corresponding determination mode based on the bit value of the information field, and determines the first MPR based on the determination mode.

For example, when the bit value of the information field is 00, the user equipment 101 determines the first MPR based on the first mode. When the bit value of the information field is 01, the user equipment 101 determines the first MPR based on the second mode. When the bit value of the information field is 10, the user equipment 101 determines the first MPR based on the third mode.

In some embodiments, in the second mode, there is no out-of-band radiation requirement, and the MPR of the user equipment 101 depends on the in-band radiation requirement, that is, depends on the error vector magnitude (EVM) requirements corresponding to different modulation modes. In this scenario, the MPR does not need to distinguish the location of the RB.

In an example, in the second mode, the user equipment (UE) 101 can determine the MPR by itself based on the UE capability. For example, in this example, if the user equipment 101 determines the MPR0 under the current transmission situation (such as modulation mode) according to the related protocol shown in the Table 1, the first MPR=(MPR0-offset value), where the offset value is determined by the user equipment 101 or predefined.

In another example, according to the second mode, the mapping relationship shown in the Table 3 can be defined or introduced through the protocol to determine MPR under different modulation modes. As shown in the Table 3, whether it is the Edge RB, the Outer RB or the Inner RB, the corresponding MPR can be determined according to the modulation mode.

In this example, compared with the related protocols in the Table 1, a smaller MPR can be determined, especially for the Edge RB and the Outer RB, which will effectively reduce the MPR, thus ensuring the uplink transmission power.

Table 3

| Modulation | | MPR (dB) |
|---|---|---|
| DFT-s-OFDM | Pi/2 BPSK | $\leq 0.2^1$ |
| | | $0^2$ |
| | Pi/2 BPSK w Pi/2 BPSK DMRS | $0^2$ |
| | QPSK | $\leq 0$ |
| | 16 QAM | $\leq 1$ |
| | 64 QAM | $\leq 2.5$ |
| | 256 QAM | $\leq 4.5$ |
| CP-OFDM | QPSK | $\leq 1.5$ |
| | 16 QAM | $\leq 2$ |
| | 64 QAM | $\leq 3.5$ |
| | 256 QAM | $\leq 6.5$ |

An embodiment of the present disclosure provides a communication method, and the method is performed by a user equipment 101. FIG. 6 is a flowchart illustrating a communication method according to an embodiment of the present disclosure. As shown in FIG. 6, the method includes the following steps S601 to S602.

At step S601, the user equipment 101 determines, based on first information, first maximum power reduction (MPR), where the first information is configured to indicate a determination mode for MPR under a first condition.

The implementation of step S601 refers to step S401, which will not be described here.

At step S602, the user equipment 101 determines, based on the first MPR, a maximum configured power ($P_{CMAX}$) allowed by a terminal.

In some embodiments, $P_{CMAX}$ corresponds to a lower limit value $P_{CMAX\_L,f,c}$ and an upper limit value $P_{CMAX\_H,f,c}$, that is, $P_{CMAX}$ is determined or denoted as $P_{CMAX,f,c}$ between the upper limit value and the lower limit value.

The MPR can be used to determine the lower limit value $P_{CMAX\_L,f,c}$, for example:

$$P_{CMAX\_L,f,c}=MIN\{P_{EMAX,c}-\Delta T_{C,c}, \quad (P_{PowerClass}-\Delta P_{PowerClass})-MAX(MAX(MPR_c+\Delta MPR_c, \quad A\text{-}MPR_c)+\Delta T_{IB,c}+\Delta T_{C,c}+\Delta T_{RxSRS}, P\text{-}MPR_c)\};$$

$$P_{CMAX\_H,f,c}=MIN\{P_{EMAX,c}, P_{PowerClass}-\Delta P_{PowerClass}\};$$

where $P_{EMAX,c}$ represents the maximum transmission power configured by network device 102, $P_{PowerClass}$ represents the maximum transmission power capability of user equipment 101, $MPR_c$ represents MPR, $A\text{-}MPR_c$ represents A-MPR, $\Delta T_{IB,c}$ represents the extra power offset, and $P\text{-}MPR_c$ represents the value of the maximum power reduction when meeting the the electromagnetic radiation exposure standard for the human body at the terminal. $\Delta T_{C,c}$, $\Delta P_{PowerClass}$, $\Delta T_{RxSRS}$ are constants. It is to be understood that the meaning of the above-mentioned parameters can also refer to the definition of relevant protocols.

In an example, if the user equipment 101 knows that the bit value of the information field is 10 according to the first information, it corresponds to the third mode. The user equipment 101 can determine the first MPR according to the third mode, that is, when the first MPR and the A-MPR are 0, the parameter "MAX(MAX(MPR$_c$+ΔMPR$_c$, A-MPR$_c$)" in the above-mentioned formula for determining P$_{CMAX\_L,f,c}$ is 0.

In the embodiment of the present disclosure, by reducing the MPR, the lower limit of P$_{CMAX}$ can be increased, that is, P$_{CMAX}$ can be increased, so that the limit value of the uplink transmission power of the terminal can be greatly increased and the uplink coverage can be effectively enhanced.

An embodiment of the present disclosure provides a communication method, and the method is performed by a network device 102. FIG. 7 is a flowchart illustrating a communication method according to an embodiment of the present disclosure. As shown in FIG. 7, the method includes the following step S701.

At step S701, a network device 102 transmits first information to the user equipment 101, where the first information is configured to indicate a determination mode for maximum power reduction (MPR) under a first condition.

In some embodiments, in the communication system shown in FIG. 1, the network device 102 can be either a ground base station or a SAN.

In some embodiments, the first condition is, for example, a condition associated with a geographical feature, location or regulatory requirements. For example, the first condition refers to the environmental condition that meets the requirements of few network access devices and do not need to consider interference with other devices, that is, the environmental condition that does not need to consider the out-of-band radiation requirement. The environment that meets the first condition can include: the high seas, deserts, mountains, remote mountainous areas and other inaccessible environments.

In some embodiments, the network device 102 can determine whether it meets the first condition according to the geographical location, geographical features or regulatory requirements of the current environment, such as a deployment place.

In some embodiments, the network device 102 can transmit indication information to the user equipment 101 through RRC signaling or DCI.

In some embodiments, the first information includes an information field for indicating the determination mode.

For example, as shown in the Table 2, when the bit values of the information field are different, the determination modes can be correspondingly indicated by the bit values.

In some embodiments, in a multi-carrier scenario, each of a plurality of carriers is correspondingly configured with the first information, or each of a plurality of frequency bands is correspondingly configured with the first information.

In an example, when configuring corresponding first information for each carrier, the network device 102 transmits the first information in per component carrier (CC).

In another example, when configuring corresponding first information for each frequency band, the network device 102 transmits the first information in per band.

It is to be understood that the implementation of this embodiment of the present disclosure can also refer to the descriptions of the corresponding embodiments in FIGS. 2 to 6, and not all of them are described here.

In the embodiments of the present disclosure, the network device 102 can transmit the first information to the user equipment 101 to indicate the determination mode for MPR under the first condition, such that the user equipment 101 can determine a more reasonable MPR under the first condition, with a view to reducing the power reduction under the first condition, thus being beneficial to enhancing the uplink coverage.

An embodiment of the present disclosure provides a communication method, and the method is performed by a network device 102. The method includes the following steps S701 to S703.

At step S701, the network device 102 transmits first information to the user equipment 101, where the first information is configured to indicate a determination mode for maximum power reduction (MPR) under a first condition.

At step S702, the network device 102 receives the request information transmitted by the user equipment 101, which is used to request the first MPR corresponding to the first condition.

In some embodiments, the user equipment 101 transmits, based on the first information and the second information, the request information when the first condition is met.

**In** some embodiments, the second information includes location information of the user equipment 101. Alternatively, the second information may be information associated with the location of the user equipment 101. The location information of the user equipment 101 can characterize the geographical location or environment where the user equipment 101 is located, including but not limited to latitude and longitude, absolute coordinates in a known reference system, relative coordinates relative to a known reference object or angular distance relative to a known reference object.

**In** some embodiments, after receiving the request information of the user equipment 101, the network device 102 may allow the request of the user equipment 101. Alternatively, the network device 102 can verify the location of the user equipment 101 and verify whether the first MPR requested by the user equipment 101 conforms to the corresponding determination mode. After the verification is passed, the allowed feedback information is transmitted.

At step S703, the network device 102 transmits feedback information corresponding to the request information to the user equipment 101, and the feedback information is used to allow the request of the user equipment.

In some embodiments, the user equipment 101 can apply the first MPR after receiving the feedback information.

In some embodiments, if the network device 102 does not transmit the feedback information within the preset duration, or transmits rejection information, the user equipment 101 cannot apply the first MPR and needs to use the MPR defined in the relevant protocol.

It is to be understood that the implementation of this embodiment of the present disclosure can also refer to the descriptions of the corresponding embodiments in FIGS. 2 to 6, and not all of them are described here.

In the embodiment of the present disclosure, the network device 102 can make a decision according to the request of the user equipment 101, and after the request of the user equipment 101 is allowed, the user equipment 101 can adopt the requested low MPR to reduce the power reduction and enhance the uplink coverage.

Based on the same conception as the method embodiments, embodiments of the present disclosure further provide a communication apparatus that may have the functions of the user equipment 101 in the method embodiments and be used to perform the steps provided in the method embodiments and implemented by the user equipment 101. The functions may be implemented by software, or by hardware executing corresponding software. The hardware or software includes one or more modules corresponding to the above-mentioned functions.

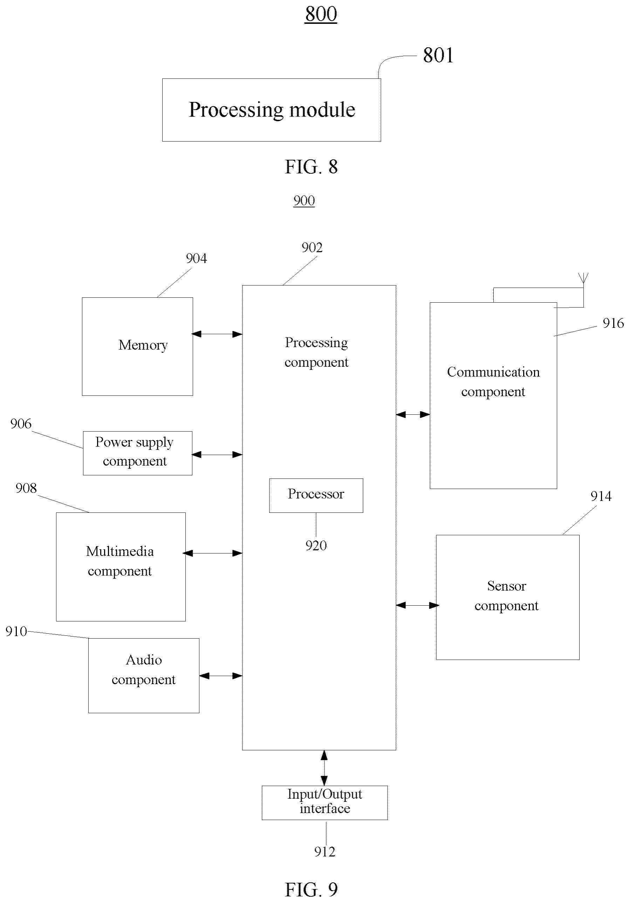

In an embodiment, an apparatus 800 as shown in FIG. 8 may serve as the user equipment 101 involved in the method embodiments and perform the steps performed by the user equipment 101 in the method embodiments. As shown in FIG. 8, the apparatus 800 may include a processing module 801, where the processing module 801 can be used by the communication device to perform processing operations, such as generating information/messages that need to be transmitted, or processing received signals to obtain information/messages.

When performing the steps implemented by the user equipment 101, the processing module 801 is configured to determine, based on first information, first maximum power reduction (MPR), where the first information is configured to indicate a determination mode for MPR under a first condition.

When a communication device is the user equipment 101, its structure may also be shown in FIG. 9. The device 900 can be a mobile phone, a computer, a digital broadcast terminal, a message transmitting and receiving device, a gaming console, a tablet device, a medical device, a fitness device, a personal digital assistant, and the like.

Referring to Figure 9, device 900 can include one or more of the following components: processing component 902, memory 904, power component 906, multimedia component 908, audio component 910, input/output (I/O) interface 912, sensor component 914, and a communication component 916.

The processing component 902 usually controls overall operations of the device 900, such as operations related to display, a telephone call, data communication, a camera operation and a record operation. The processing component 902 may include one or more processors 920 to execute instructions to complete all or a part of the steps of the above methods. Further, the processing component 902 may include one or more modules to facilitate interaction between the processing component 902 and another component. For example, the processing component 902 may include a multimedia module to facilitate the interaction between the multimedia component 908 and the processing component 902.

The memory 904 is configured to store different types of data to support operations at the device 900. Examples of such data include instructions, contact data, phone book data, messages, pictures, videos, and so on for any application or method that operates on the device 900. The memory 904 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or optical disk.

The power supply component 906 provides power for different components of the device 900. The power supply component 906 may include a power management system, one or more power sources, and other components associated with generating, managing and distributing power for the device 900.

The multimedia component 908 includes a screen providing an output interface between the apparatus 900 and the user. In some embodiments, the screen may include a liquid crystal display (LCD) and/or a touch panel (TP). If the screen includes a touch panel, the screen may be implemented as a touch screen for receiving an input signal from a user. The touch panel may include one or more touch sensors for sensing a touch, a slide and a gesture on the touch panel. The touch sensor may not only sense the boundary of a touch or slide operation but also detect duration and pressure relating to the touch or slide operation. In some examples, the multimedia component 908 may include a front camera and/or a rear camera. When the device 900 is in an operation mode, such as a shooting mode or a video mode, the front camera and/or the rear camera may receive external multimedia data. Each of the front camera and the rear camera may be a fixed optical lens system or be of a focal length and a capability of an optical zoom.

The audio component 910 is configured to output and/or input an audio signal. For example, the audio component 910 may include a microphone (MIC). When the device 900 is in an operating mode, such as a call mode, a recording mode and a speech recognition mode, the microphone is configured to receive an external audio signal. The received audio signal may be further stored in the memory 904 or sent via the communication component 916. In some embodiments, the audio component 910 also includes a speaker for outputting an audio signal.

The I/O interface 912 may provide an interface between the processing component 902 and peripheral interface modules. The above peripheral interface modules may include a keyboard, a click wheel, buttons and so on. Such buttons may include but not limited to: a home button, a volume button, a start button and a lock button.

The sensor component 914 includes one or more sensors for providing state assessments in different aspects for the device 900. For example, the sensor component 914 may detect an open/closed state of the apparatus 900, and the relative positioning of components, for example, the component is a display and a keypad of the apparatus 900. The sensor component 914 may also detect a change in position of the apparatus 900 or a component of the apparatus 900, the presence or absence of a user in contact with the apparatus 900, the orientation or acceleration/deceleration of the apparatus 900 and a change in temperature of the apparatus 900. The sensor component 914 may include a proximity sensor configured to detect presence of a nearby object without any physical contact. The sensor component 914 may also include an optical sensor, such as a CMOS or CCD image sensor used in an imaging application. In some embodiments, the sensor component 914 may also include an acceleration sensor, a gyroscope sensor, a magnetic sensor, a pressure sensor, or a temperature sensor.

The communication component 916 is configured to facilitate wired or wireless communication between the device 900 and other devices. The device 900 may access a wireless network based on a communication standard, such as Wi-Fi, 2G or 3G, or a combination thereof. In some embodiments, the communication component 916 may receive a broadcast signal or broadcast-related information from an external broadcast management system via a broadcast channel. In some embodiments, the communication component 916 may also include a Near Field Communication (NFC) module to facilitate short-range communications. For example, the NFC module may be implemented based on a radio frequency identification (RFID) technology, an infrared data association (IrDA) technology, an ultra wide band (UWB) technology, a Bluetooth (BT) technology and other technologies.

In an example, the device 900 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic elements, for executing the method in any one of the above examples.

In an example, a non-transitory computer readable storage medium including instructions, such as the memory 904 including instructions, is also provided. The above instructions may be executed by the processor 920 of the device 900 to complete the method. For example, the non-transitory computer-readable storage medium may be a ROM, a RAM, a CD-ROM, a magnetic tape, a floppy disc, an optical data storage device, and the like.

Based on the same conception as the method embodiments, embodiments of the present disclosure further provide a communication apparatus that may have the functions of the network device 102 in the method embodiments and be used to perform the steps provided in the method embodiments and implemented by the network device 102. The functions may be implemented by software, or by hardware executing corresponding software. The hardware or software includes one or more modules corresponding to the above-mentioned functions.

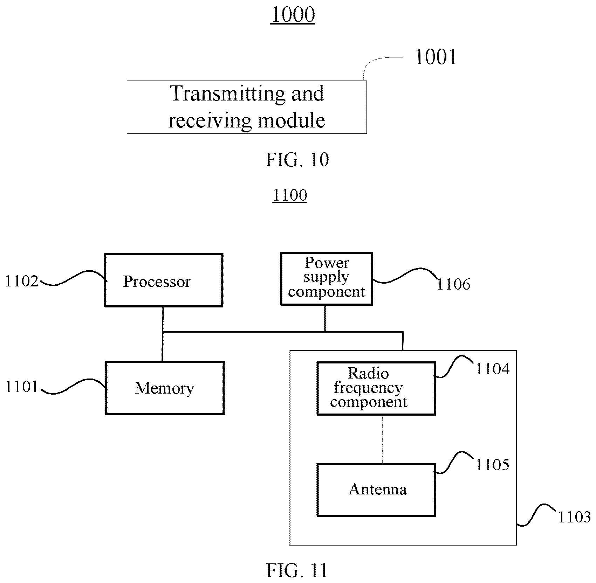

In an embodiment, an apparatus 1000 as shown in FIG. 10 may serve as the network device 102 involved in the method embodiments and perform the steps implemented by the network device 102 in the method embodiments. As shown in FIG. 10, the apparatus 1000 may include a transmitting and receiving module 1001, where the transmitting and receiving module 1001 may be configured to support the communication device for communication.

When performing the steps implemented by network device 102, the transmitting and receiving module 1001 is configured to transmit first information to a user equipment, where the first information is configured to indicate a determination mode for maximum power reduction (MPR) under a first condition.

When a communication device is a network device 102, its structure may also be shown in FIG. 11. The structure of the communication device is illustrated by the example of the base station. As shown in FIG. 11, the communication device 1100 includes a memory 1101, a processor 1102, a transmitting and receiving component 1103, and a power supply component 1106. The memory 1101 is coupled to the processor 1102 and may be configured to store programs and data necessary for the communication device 1100 to implement various functions. The processor 1102 is configured to support the communication device 1100 to perform the corresponding function in the above-mentioned methods, which can be realized by calling the programs stored in the memory 1101. The transmitting and receiving component 1103 may be a wireless transceiver that may be used to support the communication device 1100 to receive signaling and/or data through a radio Interface, as well as to transmit signaling and/or data. The transmitting and receiving component 1103 may also be referred to as a transmitting and receiving unit or a communication unit, and the transmitting and receiving component 1103 may include an radio frequency (RF) component 1104 and one or more antennas 1105, where the RF component 1104 may be a remote radio unit (RRU), which may be specifically used for transmission of RF signals and conversion of RF signals to baseband signals, and the one or more antennas 1105 may be specifically used to perform radiation and reception of RF signals.

When the communication device 1100 needs to transmit data, the processor 1102 can perform baseband processing on the data to be transmitted, and then output a baseband signal to the radio frequency unit, and the radio frequency unit performs radio frequency processing on the baseband signal and then transmits the radio frequency signal in the form of electromagnetic waves through the antenna. When there is data transmitted to the communication device 1100, the radio frequency unit receives the radio frequency signal through the antenna, converts the radio frequency signal to a baseband signal, and outputs the baseband signal to the processor 1102, and the processor 1102 converts the baseband signal to data and processes the data.

After considering the specification and practicing the present disclosure, those skilled in the art would easily conceive of other implementations of the present disclosure. The present disclosure is intended to include any variations, uses and adaptive changes of the present disclosure. These variations, uses and adaptive changes follow the general principle of the present disclosure and include common knowledge or conventional technical means in the prior art not disclosed in the present disclosure. The specification and examples are considered as exemplary only, with a true scope and spirit of the present disclosure being indicated by the following claims.

It is to be understood that the present disclosure is not limited to the precise construction described herein and shown in the drawings, and that various modifications and changes may be made without departing from the scope thereof. The scope of the present disclosure is to be limited only by the appended claims.

Industrial utility

In the method of the present disclosure, according to the indication of the first information, the user equipment can determine a more reasonable MPR under the first condition, with a view to reducing the power reduction under the first condition, thus being beneficial to enhancing the uplink coverage.

**Claims**

1.  A communication method, performed by a user equipment, comprising:
    determining, based on first information, first maximum power reduction (MPR), wherein the first information is configured to indicate a determination mode for MPR under a first condition.

2.  The method of claim 1, further comprising:
    receiving the first information transmitted by a network device.

3.  The method of claim 1, wherein determining, based on the first information, the first MPR comprises:

    transmitting, based on the first information and second information, request information to a network device, wherein the request information is configured to request the first MPR corresponding to the first condition; and in response to receiving feedback information transmitted by the network device, determining the first MPR, wherein the feedback information is configured to allow a request of the user equipment.

4.  The method of claim 3, wherein the second information comprises location information of the user equipment.

5.  The method of any one of claims 1 to 4, wherein the first information comprises an information field for indicating the determination mode.

6.  The method of claim 5, wherein determining, based on the first information, the first MPR comprises:

    determining, based on a bit value of the information field, a corresponding determination mode; and determining, based on the corresponding determination mode, the first MPR.

7.  The method of any one of claims 1 to 6, further comprising:
    determining, based on the first MPR, a maximum configured power ($P_{CMAX}$) allowed by a terminal.

8.  The method of any one of claims 1 to 6, wherein in a multi-carrier scenario, each of a plurality of carriers is correspondingly configured with the first information, or each of a plurality of frequency bands is correspondingly configured with the first information.

9.  A communication method, performed by a network device, comprising:
    transmitting first information to a user equipment, wherein the first information is configured to indicate a determination mode for maximum power reduction (MPR) under a first condition.

**10.** The method of claim 9, further comprising:

> receiving request information transmitted by the user equipment, wherein the request information is configured to request first MPR corresponding to the first condition; and
> transmitting feedback information corresponding to the request information to the user equipment, wherein the feedback information is configured to allow a request of the user equipment.

**11.** The method of claim 9 or 10, wherein the first information comprises an information field for indicating the determination mode.

**12.** The method of any one of claims 9 to 11, wherein in a multi-carrier scenario, each of a plurality of carriers is correspondingly configured with the first information, or each of a plurality of frequency bands is correspondingly configured with the first information.

**13.** A communication apparatus, applied to a user equipment, comprising:
a processing module, configured to determine, based on first information, first maximum power reduction (MPR), wherein the first information is configured to indicate a determination mode for MPR under a first condition.

**14.** A communication apparatus, applied to a network device, comprising:
a transmitting and receiving module, configured to transmit first information to a user equipment, wherein the first information is configured to indicate a determination mode for maximum power reduction (MPR) under a first condition.

**15.** A user equipment, comprising one or more processors and a memory, wherein

> the memory is configured to store computer programs; and
> the computer programs, when executed by the one or more processors, cause the one or more processors to perform the method of any one of claims 1 to 8.

**16.** A network device, comprising one or more processors and a memory, wherein

> the memory is configured to store computer programs; and
> the computer programs, when executed by the one or more processors, cause the one or more processors to perform the method of any one of claims 9 to 12.

**17.** A computer-readable storage medium, storing instructions thereon, wherein the instructions, when executed by a computer, cause the computer to perform the method of any one of claims 1 to 8.

**18.** A computer-readable storage medium, storing instructions thereon, wherein the instructions, when executed by a computer, cause the computer to perform the method of any one of claims 9 to 12.

Wireless communication system 100

SAN

102

101

FIG. 1

```
┌─────────────────────┐                              ┌─────────────────────┐
│  User equipment 101 │                              │  Network device 102 │
└─────────────────────┘                              └─────────────────────┘
```

S201, Transmit first information, where the first information is configured to indicate a determination mode for MPR under a first condition

S202, Determine, based on first information, first MPR

FIG. 2

```
┌─────────────────────┐                              ┌─────────────────────┐
│  User equipment 101 │                              │  Network device 102 │
└─────────────────────┘                              └─────────────────────┘
```

S301, Transmit, based on the first information and the second information, request information, where the request information is configured to request the first MPR corresponding to the first condition

S302, Transmit feedback information, where the feedback information is configured to allow a request of the user equipment

S303, Determine the first MPR

FIG. 3

Determine, based on first information, first MPR, where the first information is configured to indicate a determination mode for MPR under a first condition — S401

FIG. 4

Receive the first information transmitted by a network device, where the first information is configured to indicate a determination mode for MPR under a first condition — S501

Determine, based on first information, the first MPR — S502

FIG. 5

Determine, based on first information, first MPR, where the first information is configured to indicate a determination mode for MPR under a first condition — S601

Determine, based on the first MPR, a maximum configured power ($P_{CMAX}$) allowed by a terminal — S602

FIG. 6

Transmit first information to a user equipment, where the first information is configured to indicate a determination mode for MPR under a first condition — S701

FIG. 7

800

801

Processing module

FIG. 8

900

904

902

916

Memory

Processing
component

Communication
component

906

Power supply
component

908

Processor

914

Multimedia
component

920

910

Sensor
component

Audio
component

Input/Output
interface

912

FIG. 9

1000

1001

Transmitting and
receiving module

FIG. 10

1100

1102 Processor

Power
supply
component 1106

1101 Memory

Radio
frequency
component 1104

Antenna 1105

1103

FIG. 11

## INTERNATIONAL SEARCH REPORT

| International application No. |
|---|
| **PCT/CN2023/077304** |

### A. CLASSIFICATION OF SUBJECT MATTER

H04W52/36(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNKI, CNTXT, ENTXTC: 用户设备, 网络设备, 基站, 最大功率回退, 指示, 条件, 确定, 方式, 请求, 位置, 同意, 允许, 比特; ENTXT, 3GPP: UE, network device, BS, gNB, MPR, indication, condition, determination, mode, request, location, position, admit, bit

### C. DOCUMENTS CONSIDERED TO BE RELEVANT

| Category* | Citation of document, with indication, where appropriate, of the relevant passages | Relevant to claim No. |
|---|---|---|
| X | CN 113873630 A (HUAWEI TECHNOLOGIES CO., LTD.) 31 December 2021 (2021-12-31) description, paragraphs [0102]-[0163] | 1, 2, 5-9, 11-18 |
| A | CN 111279758 A (BEIJING XIAOMI MOBILE SOFTWARE CO., LTD.) 12 June 2020 (2020-06-12) entire document | 1-18 |
| A | CN 113596976 A (HUAWEI TECHNOLOGIES CO., LTD.) 02 November 2021 (2021-11-02) entire document | 1-18 |
| A | US 2016381644 A1 (QUALCOMM INCORPORATED) 29 December 2016 (2016-12-29) entire document | 1-18 |
| A | HUAWEI. "Introduction of NG UE Capability Info Indication" *3GPP tsg_ran\WG3_Iu R3-172594*, 29 June 2017 (2017-06-29), entire document | 1-18 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2023** | **10 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/077304**

| Patent document cited in search report | | | Publication date (day/month/year) | Patent family member(s) | | | Publication date (day/month/year) |
|---|---|---|---|---|---|---|---|
| CN | 113873630 | A | 31 December 2021 | None | | | |
| CN | 111279758 | A | 12 June 2020 | US | 2023043225 | A1 | 09 February 2023 |
| | | | | WO | 2021142847 | A1 | 22 July 2021 |
| CN | 113596976 | A | 02 November 2021 | None | | | |
| US | 2016381644 | A1 | 29 December 2016 | TW | 201701701 | A | 01 January 2017 |
| | | | | WO | 2016209512 | A1 | 29 December 2016 |

Form PCT/ISA/210 (patent family annex) (July 2022)